# EUROPEAN PATENT APPLICATION

(11) **EP 1 944 938 A1**
(43) Date of publication of application: **16.07.2008**
(21) Application number: 07022576.8
(22) Date of filing: 21.11.2007
(51) Int. Cl.: H04L 29/06

(54) **Methods and apparatuses for performing integrity protection for a concatenated message**

(30) Priority: 21.11.2006 US 860223 P
(71) Applicant: Innovative Sonic Limited, Tortola (VG)
(72) Inventor: Jiang, Sam Shiaw-Shiang, Peitou Taipei City (TW)
(74) Representative: Weber, Joachim

(57) **Abstract**

A method for performing integrity protection in a receiver of a wireless communications system includes receiving a concatenated message including a Non-Access Stratum message, a first message authentication code of the Non-Access Stratum message, a Radio Resource Control message and a second message authentication code of the concatenated message (302), performing an integrity protection procedure for the concatenated message (304), and discarding the concatenated message and not delivering the Non-Access Stratum message to an upper layer when the second message authentication code does not pass the integrity protection procedure (306).

## Description

This application claims the benefit of U.S. Provisional Application No. 60/860,223, filed on Nov 21, 2006 and entitled "Security structure for LTE", the contents of which are incorporated herein by reference.

The present invention relates to a method and apparatus for performing integrity protection in a wireless communications system according to the pre-characterizing clauses of claims 1, 3, 4, 5, 7 and 8.

The third generation (3G) mobile telecommunications system provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. According to the related protocol specifications, a protocol stack of the 3G mobile telecommunications system can be segmented into access stratum (AS) and non-access stratum (NAS). The AS comprises a Radio Resource Control (RRC), Radio Link Control (RLC), Media Access Control (MAC), Packet Data Convergence Protocol (PDCP), Broadcast/Multicast Control (BMC) and other sub-layers of different functions. Those skilled in the art are familiar with the operation of the above-mentioned sub-layers; therefore, they will not be further mentioned.

In order to protect signaling commands from being counterfeited by unauthorized devices, the prior art 3G mobile communications system can trigger an Integrity Protection (IP) procedure for performing IP. After the IP procedure is activated, every time the User Equipment (UE) or the network transmits signaling message, the UE or the network will add a Message Authentication Code for data Integrity (MAC-I), whose content is different for each signaling message. A legal UE or network can authenticate the accuracy of the MAC-I by calculating a MAC-I corresponding to the received signaling message, and thereby accept the received signaling message when the calculated MAC-I and the MAC-I embedded in the received signaling message are the same or act as if the message was not received when the calculated MAC-I and the embedded MAC-I differ, i.e. when the IP check fails.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

A complete protocol specification is accomplished with lasting discussion, editing, and modification. Now, parts of the LTE structure are under Technical Report (TR) stage, meaning that the related protocol specifications are not finished. Therefore, many functions are still For Further Study (FFS).

According to the current system structure of the LTE system, the following can be summarized:
1. For User Plane, the layer structure is, from low to high, PHY (Physical layer), MAC, RLC, and PDCP.
2. For Control Plane, the layer structure is, from low to high, PHY, MAC, RLC, RRC, PDCP, and NAS.
3. For User Plane, ciphering is performed in PDCP.
4. For Control Plane, ciphering and IP for RRC messages are done in RRC and ciphering and IP for NAS messages are done in PDCP.
5. NAS messages may or may not be concatenated with RRC messages.
6. No IP from RRC for non-concatenated messages.
7. IP from RRC for concatenated NAS messages is FFS.
8. Protocol error detection and recovery function is performed in RLC.

Therefore, the prior art does not well specify the operation of IP from RRC for concatenated NAS messages.

This in mind, the present invention aims at providing a method and apparatus for performing integrity protection in a wireless communications system, so as to accurately performing Integrity Protection, enhance transmission efficiency, or enhance information security.

This is achieved by a method and apparatus for performing integrity protection in a wireless communications system according to claims 1, 3, 4, 5, 7 and 8. The dependent claims pertain to corresponding further developments and improvements.

As will be seen more clearly from the detailed description following below, the claimed method for performing integrity protection in a receiver of a wireless communications system comprises receiving a concatenated message comprising a Non-Access Stratum message, a first message authentication code of the Non-Access Stratum message, a Radio Resource Control message and a second message authentication code of the concatenated message, performing an integrity protection procedure for the concatenated message, and discarding the concatenated message and not delivering the Non-Access Stratum message to an upper layer when the second message authentication code does not pass the integrity protection procedure.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 to Fig. 5 are flowcharts of processes according to embodiments of the present invention.

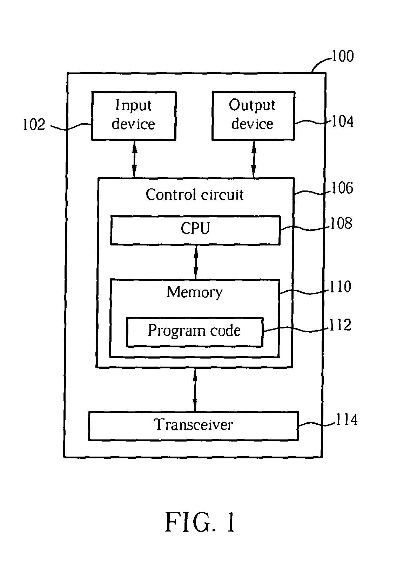

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

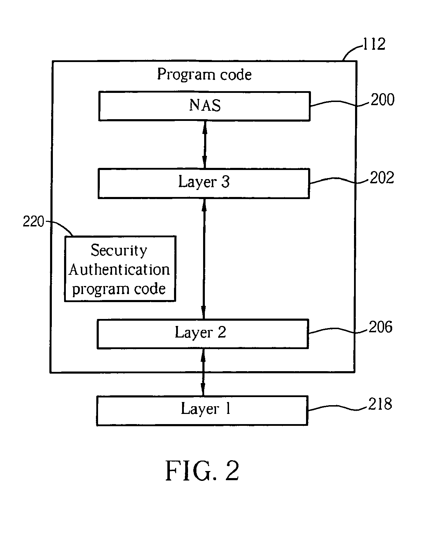

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1 218. The NAS 200 can generate NAS messages for realizing NAS applications. The Layer 3 202 is preferably composed of an RRC layer and a PDCP layer, for performing resource control. The Layer 2 206 performs link control, and the Layer 1 218 performs physical connections.

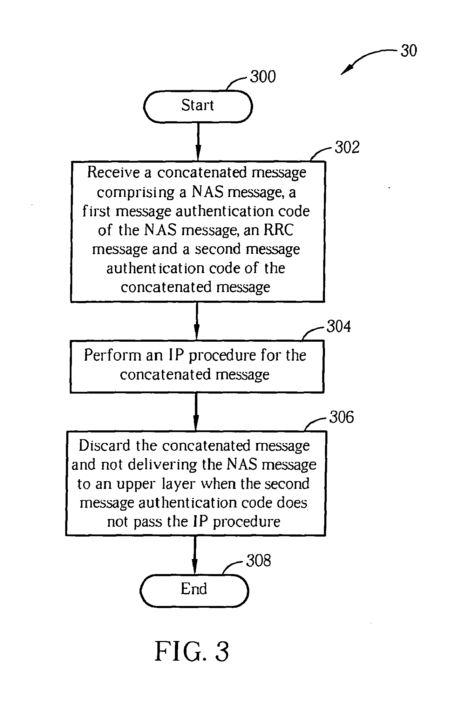

In order to enhance information security, the program code 112 can perform IP for messages, to protect signaling messages or commands from being counterfeited by unauthorized devices. In such a situation, the embodiment of the present invention provides a Security Authentication program code 220, for accurately performing IP. Please refer to Fig. 3, which illustrates a schematic diagram of a process 30. The process 30 is utilized for performing integrity protection in a receiver of a wireless communications system, and can be compiled into the Security Authentication program code 220. The process 30 comprises the following steps:
Step 300: Start.
Step 302: Receive a concatenated message comprising a NAS message, a first message authentication code of the NAS message, an RRC message and a second message authentication code of the concatenated message.
Step 304: Perform an IP procedure for the concatenated message.
Step 306: Discard the concatenated message and not delivering the NAS message to an upper layer when the second message authentication code does not pass the IP procedure.
Step 308: End.

According to the process 30, when a concatenated message does not pass the IP procedure, the embodiment of the present invention discards the RRC message and NAS message contained by the concatenated message, and does not deliver the NAS message to the upper layer. Preferably, the IP procedure is performed on the RRC message and is not performed on the NAS message.

In such a situation, when the RRC message in the concatenated message does not pass the IP procedure, the RRC message is deemed to be fake, so is the NAS message concatenated with the RRC message. Therefore, the embodiment of the present invention discards the concatenated message and does not deliver the NAS message to the upper layer.

Therefore, via the process 30, the embodiment of the present invention can accurately perform IP on concatenated messages, so as to enhance information security.

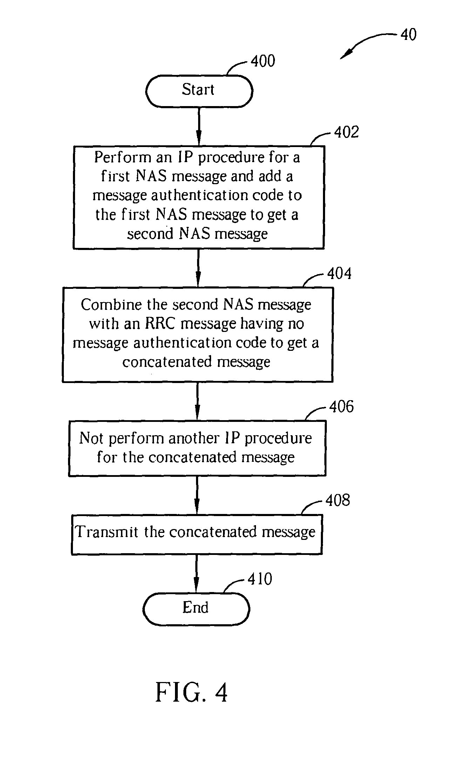

Please refer to Fig. 4, which illustrates a schematic diagram of a process 40. The process 40 is utilized for performing integrity protection in a transmitter of a wireless communications system, and can be compiled into the Security Authentication program code 220. The process 40 comprises the following steps:
Step 400: Start.
Step 402: Perform an IP procedure for a first NAS message and add a message authentication code to the first NAS message to get a second NAS message.
Step 404: Combine the second NAS message with an RRC message having no message authentication code to get a concatenated message.
Step 406: Not perform another IP procedure for the concatenated message.
Step 408: Transmit the concatenated message.
Step 410: End.

According to the process 40, after the concatenated message containing the RRC message and the NAS message is formed, since the NAS message has been performed the IP procedure, the embodiment of the present invention no longer performs another IP procedure for the concatenated message, so that overhead of the extra message authentication code can be reduced, to decrease the length of the concatenated message.

Therefore, via the process 40, when the concatenated message containing the RRC message and the NAS message is performed IP, the embodiment of the present invention can reduce unnecessary message authentication code, so as to enhance transmission efficiency without affecting information security.

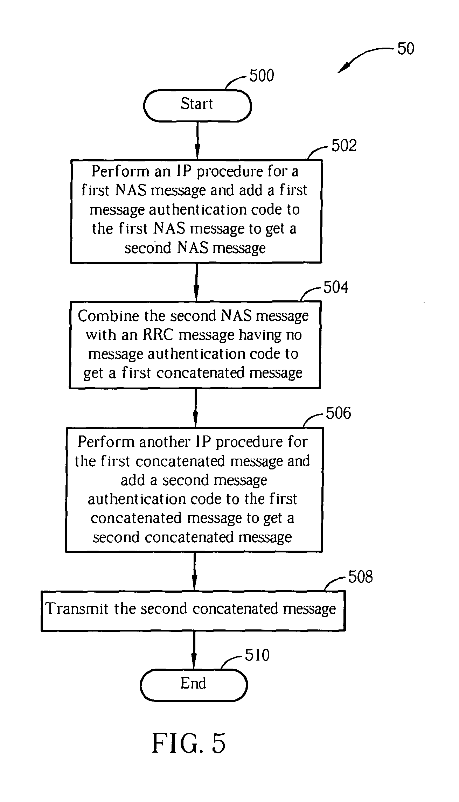

Please refer to Fig. 5, which illustrates a schematic diagram of a process 50. The process 50 is utilized for performing integrity protection in a transmitter of a wireless communications system, and can be compiled into the Security Authentication program code 220. The process 50 comprises the following steps:
Step 500: Start.
Step 502: Perform an IP procedure for a first NAS message and add a first message authentication code to the first NAS message to get a second NAS message.
Step 504: Combine the second NAS message with an RRC message having no message authentication code to get a first concatenated message.
Step 506: Perform another IP procedure for the first concatenated message and add a second message authentication code to the first concatenated message to get a second concatenated message.
Step 508: Transmit the second concatenated message.
Step 510: End.

According to the process 50, after the concatenated message containing the RRC message and the NAS message is formed, the embodiment of the present invention performs another IP procedure for the whole of the concatenated message (not for only the RRC message in the concatenated message but also the NAS message). The length of the message authentication code generated by performing another IP procedure for only the RRC message of the concatenated message and the length of the message authentication code generated by performing another IP procedure for the whole concatenated message are the same, i.e. the length of the second concatenated message is not increased, so that overhead of the message authentication code will not be increased.

Therefore, via the process 50, the embodiment of the present invention can perform another IP procedure for the whole concatenated message without decreasing transmission efficiency, so as to enhance information security.

In summary, the embodiment of the present invention provides variable implementations for IP of concatenated messages, so as to accurately perform IP, enhance transmission efficiency, and/or enhance information security.

## Claims

1. A method for performing integrity protection in a receiver of a wireless communications system comprising:
receiving a concatenated message comprising a Non-Access Stratum message, a first message authentication code of the Non-Access Stratum message, a Radio Resource Control message and a second message authentication code of the concatenated message (302);
**characterized by** performing an integrity protection procedure for the concatenated message (304); and
discarding the concatenated message and not delivering the Non-Access Stratum message to an upper layer when the second message authentication code does not pass the integrity protection procedure (306).

2. The method of claim 1, **characterized in that** the integrity protection procedure is performed on the Radio Resource Control message.

3. A method for performing integrity protection in a transmitter of a wireless communications system comprising:
performing an integrity protection procedure for a first Non-Access Stratum message and adding a message authentication code to the first Non-Access Stratum message to get a second Non-Access Stratum message (402); and
combining the second Non-Access Stratum message with a Radio Resource Control message having no message authentication code to get a concatenated message (404);
**characterized by** not performing another integrity protection procedure for the concatenated message (406); and
transmitting the concatenated message (408).

4. A method for performing integrity protection in a transmitter of a wireless communications system comprising:
performing an integrity protection procedure for a first Non-Access Stratum message and adding a first message authentication code to the first Non-Access Stratum message to get a second Non-Access Stratum message (502); and
combining the second Non-Access Stratum message with a Radio Resource Control message having no message authentication code to get a first concatenated message (504);
**characterized by** performing another integrity protection procedure for the first concatenated message and adding a second message authentication code to the first concatenated message to get a second concatenated message (506); and
transmitting the second concatenated message (508).

5. A communications device (100) for accurately performing Integrity Protection in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
receiving a concatenated message comprising a Non-Access Stratum message, a first message authentication code of the Non-Access Stratum message, a Radio Resource Control message and a second message authentication code of the concatenated message (302);
**characterized by** performing an integrity protection procedure for the concatenated message (304); and
discarding the concatenated message and not delivering the Non-Access Stratum message to an upper layer when the second message authentication code does not pass the integrity protection procedure (306).

6. The communications device of claim 5, **characterized in that** the integrity protection procedure is performed on the Radio Resource Control message.

7. A communications device (100) for accurately performing Integrity Protection in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
performing an integrity protection procedure for a first Non-Access Stratum message and adding a message authentication code to the first Non-Access Stratum message to get a second Non-Access Stratum message (402); and
combining the second Non-Access Stratum message with a Radio Resource Control message having no message authentication code to get a concatenated message (404);
**characterized by** not performing another integrity protection procedure for the concatenated message (406); and transmitting the concatenated message (408).

8. A communications device (100) for accurately performing Integrity Protection in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
performing an integrity protection procedure for a first Non-Access Stratum message and adding a first message authentication code to the first Non-Access Stratum message to get a second Non-Access Stratum message (502); and
combining the second Non-Access Stratum message with a Radio Resource Control message having no message authentication code to get a first concatenated message (504);
**characterized by** performing another integrity protection procedure for the first concatenated message and adding a second message authentication code to the first concatenated message to get a second concatenated message (506); and
transmitting the second concatenated message (508).
